# EUROPÄISCHE PATENTSCHRIFT

(11) **EP 3 698 063 B1**
(45) Veröffentlichungstag und Bekanntmachung des Hinweises auf die Patenterteilung: **15.06.2022**
(21) Anmeldenummer: 18778849.2
(22) Anmeldetag: 19.09.2018
(51) Int. Cl.: F16D 13/75, F16D 25/08, F15B 15/14, F16D 25/12

(54) **BETÄTIGUNGSEINRICHTUNG MIT SCHMUTZABSCHIRMUNG**
ACTUATING DEVICE WITH DIRT SHIELDING
DISPOSITIF D'ACTIONNEMENT COMPRENANT UNE PROTECTION CONTRE LES SALETÉS

(30) Priorität: 17.10.2017 DE 102017218512
(43) Veröffentlichungstag der Anmeldung: 26.08.2020
(73) Patentinhaber: ZF Friedrichshafen AG, 88046 Friedrichshafen (DE)
(72) Erfinder: HAHN, Stephan, 97494 Bundorf (DE); ERB, Fabian, 97421 Schweinfurt (DE); DIEMER, Matthias, 97493 Bergrheinfeld (DE)
(74) Vertreter: ZF Friedrichshafen AG
(86) Internationale Anmeldenummer: PCT/EP2018/075260
(87) Internationale Veröffentlichungsnummer: WO 2019/076563

(56) Entgegenhaltungen:
- EP-A1- 0 561 506
- DE-T2- 60 211 170
- DE-T2- 69 306 098
- DE-U1- 29 914 060
- US-A- 2 971 399
- US-A- 3 430 744
- US-A- 3 828 894

## Beschreibung

Die Erfindung betrifft eine Betätigungseinrichtung mit einer Schmutzabschirmung. Aus dem Stand der Technik sind Betätigungseinrichtungen bekannt, die einen Verschleißausgleich aufweisen. Ein solcher Verschleißausgleich weist zumeist eine komplexe Mechanik auf. Diese Mechanik muss zur Gewährleistung der Verschleißausgleichsfunktion über die gesamte Lebensdauer besonders gut vor eindringendem Schmutz bewahrt werden.

DE 299 14 060 U1, DE 602 11 170 T2 und DE 693 06 098 T2 zeigen aus dem Stand der Technik bekannte Betätigungseinrichtungen für ein Kraftfahrzeug.

Es ist daher Aufgabe eine Betätigungseinrichtung bereitzustellen, die vor eindringendem Schmutz besonders gut geschützt ist.

Die vorstehende Aufgabe wird gelöst durch eine Betätigungseinrichtung für ein Kraftfahrzeug gemäß dem Patentanspruch 1. In den abhängigen Patentansprüchen sind vorteilhafte Ausführungsvarianten der Betätigungseinrichtung dargestellt.

Die Betätigungseinrichtung ist für ein Kraftfahrzeug geeignet, insbesondere für ein Nutzkraftfahrzeug. Zudem ist die Betätigungseinrichtung als pneumatische Betätigungseinrichtung ausgebildet. Die Betätigungseinrichtung umfasst ein Gehäuse, welches einteilig oder mehrteilig, beispielsweise aus einem Arbeitszylinder und einem fest mit diesem verbundenen Führungsrohr, ausgebildet ist. Des Weiteren ist an der Betätigungseinrichtung ein mehrteiliger Arbeitskolben ausgebildet, der sich axial gegenüber dem Gehäuse verschieben kann.

Das Gehäuse und der Arbeitskolben umschließen einen Druckraum, der mit einem Druckmedium gefüllt werden kann, um eine Kupplung durch ein axiales Ausrücken des Arbeitskolbens gegenüber dem Gehäuse zu betätigen. Dieser Arbeitsraum ist bei einem pneumatischen System vorteilhafterweise mit einem sehr geringen Arbeitsvolumen ausgebildet. Dies ist begründet in der Kompressibilität des pneumatischen Druckmediums. Durch ein geringes Arbeitsvolumen wird dementsprechend ein schnelles und komfortables Betätigen der Kupplung ermöglicht. Ein kleines Arbeitsvolumen wird durch die Verwendung eines mehrteiligen Arbeitskolbens ermöglicht. Ein solcher mehrteiliger Arbeitskolben weist unter anderem einen Hauptkolben sowie einen Stellkolben aufweist, die für eine Verschleißausgleichfunktion axial beweglich zueinander ausgebildet sind. Ein an einer Reibungskupplung auftretender Verschleiß macht sich an eine Reibungskupplung durch eine abnehmende Belagdicke bemerkbar. Bei eine Reibungskupplung wird üblicherweise eine Membranfeder verwendet, deren Membranfederzungen sich mit ansteigendem Verschleiß der Kupplung in axialer Richtung auf die pneumatische Betätigungseinrichtung zu bewegen. Durch die axiale Beweglichkeit von Stellkolben zu Hauptkolben kann der Stellkolben der Bewegung der Membranfederzungen folgen und in den Hauptkolben einfahren und dadurch den Verschleiß der Reibungskupplung ausgleichen. Durch die membranfedergeführte Relativbewegung zwischen Stellkolben und Hauptkolben stellt sich an dem Arbeitskolben die korrekte Wirklänge ein. Zur Gewährleistung eines dauerhaften Anlagekontakts zwischen Stellkolben und Membranfeder, insbesondere über ein Ausrücklager, ist der Stellkolben gegenüber der Membranfeder in axialer Richtung vorgespannt, beispielsweise durch ein Federelement zwischen Stellkolben und Hauptkolben. Zwischen dem Hauptkolben und dem Stellkolben ist so viel Platz vorhanden, so dass der Stellkolben die Verschleißausgleichbewegung über dem gesamten Verschleißweg der Kupplung nachführen kann.

An der Betätigungseinrichtung ist zudem eine Klemmeinrichtung ausgebildet, die die eine Relativbewegung zwischen Hauptkolben und Stellkolben während eines Betätigungsvorgangs verhindert. Diese Klemmeinrichtung stellt einen Klemmmechanismus bereit, der während eines Betätigungsvorgangs eine Fixierung zwischen Hauptkolben und Stellkolben bewirkt, so dass die axiale Position zwischen Hauptkolben und Stellkolben und damit auch die Wirklänge des Arbeitskolbens während des Betätigungsvorgangs unverändert bleibt. Mit Abschluss des Betätigungsvorgangs wird die Fixierung wieder freigegeben, sodass der Hauptkolben und der Stellkolben wieder eine entsprechende Ausgleichsbewegung zueinander durchführen können.

Eine solche Klemmeinrichtung ist beispielsweise durch eine Mechanik ausgebildet, die zwischen dem Hauptkolben und dem Stellkolben angeordnet ist. Diese befindet sich nicht innerhalb des Arbeitsraums, der über Dichtungen von einer Umgebung abgeschirmt ist.

Demnach ist an der Betätigungseinrichtung ein Abschirmelement zum Schutz der Betätigungseinrichtung vor Schmutz ausgebildet. Dieses Abschirmelement ist vorteilhafterweise an zwei Bauteilen der pneumatischen Betätigungseinrichtung angeordnet, insbesondere befestigt. Das Abschirmelement erstreckt sich entsprechend von dem ersten zu dem zweiten Bauteil und schirmt den umschlossenen Bereich von eindringendem Schmutz ab.

Das Abschirmelement in seiner Länge vorteilhafterweise variabel ausgebildet, um eine Relativbewegung der Bauteile ausgleichen zu können und trotzdem jederzeit die Schmutzabschirmfunktion gewährleisten zu können.

In einer allgemeineren Variante ist das Abschirmelement zwischen dem Gehäuse und einem Teilkolben des Arbeitskolbens, also dem Stellkolben oder dem Hauptkolben, angeordnet. Für den Aufbau des Arbeitskolbens durch einen Stellkolben und einen Hauptkolben gibt es verschiedene Ausführungsvarianten, die alle hierunter fallen. Die verschiedenen Ausgestaltungsvarianten des Arbeitskolbens unterscheiden sich unter anderem in der Anordnung der Gleitflächen, also welcher Teilkolben an dem Gehäuse gleitet oder welcher Teilkolben an einem anderen Teilkolben gleitet.

Das Abschirmelement kann insbesondere zwischen dem Gehäuse und dem Hauptkolben angeordnet sein. Gehäuseseitig ist das Abschirmelement günstigerweise an einem Führungsrohr angeordnet. Diese Anordnung deckt insbesondere einen radial innenliegenden Bereich ab und schützt insbesondere Gleitflächen der Kolben vor eindringendem Schmutz. Alternativ oder zusätzlich kann eine Anordnung zwischen Gehäuse und Arbeitszylinder einen radial Außenliegenden Bereich der Betätigungseinrichtung vor Schmutz abschirmen, insbesondere die Klemmeinrichtung.

In einer anderen Variante ist das Abschirmelement zwischen dem Gehäuse und dem Stellkolben angeordnet. Auch hier ist eine gehäuseseitige Anordnung an einem Führungsrohr vorteilhaft.

In einer weiteren Grundsätzlichen Anordnungsvarianten kann das Abschirmelement an zwei Teilkolben, insbesondere dem Hauptkolben und dem Stellkolben, angeordnet sein. Hierdurch wird insbesondere eine Gleitfläche zwischen zwei Teilkolben vor eindringendem Schmutz geschützt.

Es ist auch Vorteilhaft, wenn das Abschirmelement einerseits an einem Teilkolben, insbesondere dem Stellkolben und andererseits an einem Element der Klemmeinrichtung angeordnet ist. Dadurch lassen sich der radial äußere Bereich der Betätigungseinrichtung und insbesondere die Klemmeinrichtung optimal vor Verschmutzung schützen.

Die Anordnung des Abschirmelements an den genannten Bauteilen kann unmittelbar oder auch mittelbar also über ein Zwischenbauteil erfolgen. An der Betätigungseinrichtung können auch mehrere der erläuterten Varianten gleichzeitig ausgeführt sein.

Durch die Verwendung eines oder mehrerer Abschirmelemente an der Betätigungseinrichtung wird eine gute Schmutzabschirmung erreicht, die eine Lebensdauer des Verschleißmechanismus über die gesamte Lebensdauer der Reibungskupplung ermöglicht.

Im Weiteren werden vorteilhafte Ausführungsvarianten der Betätigungseinrichtung erläutert.

Es wird vorgeschlagen, dass das Abschirmelement als Faltenbalg, als Rollbalg oder als Teleskophülse ausgebildet ist.

Der Faltenbalg stellt ein elastisches Abschirmelement bereit, welches sich der axialen Bewegung zwischen zwei Bauteilen durch elastische Verformung anpasst und durch seine Schmutzundurchlässigkeit eine dauerhafte Schmutzabschirmung bereitstellt.

Der Rollbalg hat eine ähnliche Wirkungsweise wie ein Faltenbalg. Anstelle des Zieharmonikaeffekts drückt sich die elastisch Verformung durch Aufrollen und Abrollen des Faltenbalgs aus. Der Rollbalg rollt sich entsprechend der axialen vorgegebenen Bewegung zwischen den beiden Bauteilen auf oder ab. Günstigerweise ist eine Rollfläche ausgebildet, an er sich der Rollbalg anlegen und abrollen kann.

Die Teleskophülse kann beispielsweise durch ein oder mehrere Hülsen ausgebildet sein, die jeweils für sich formstabil sind. Eine Teleskophülse weist entsprechend eine oder mehrere Hülsen auf, die auf einem benachbarten Bauteil oder auf einer benachbarten Hülse gleiten können. Die Hülsen verschieben sich gegeneinander um durch eine teleskopartige Bewegung eine ununterbrochene Schmutzabschirmung bereitzustellen. Die Hülsen weisen entsprechende Anschläge auf, die mit einer benachbarten Hülse oder einem Bauteil verliersicher in einander eingreifen. Die Hülsen können also nicht auseinanderfallen. Mit besonderem Vorteil sind an einer Teleskophülse zwei oder mehr Hülsen verwendet, wobei die erste und die letzte Hülse vorzugsweise verliersicher und fest mit einem jeweiligen Bauteil der Betätigungseinrichtung verbunden sind.

In einer vorteilhaften Ausführungsvariante greift das Abschirmelement an dem jeweiligen Bauteil in eine Sicherungsform ein.

Eine solche Sicherungsform kann beispielsweise eine Nut sein, in die beispielsweise eine Teleskophülse, insbesondere eine Hülse der Teleskophülse einschnappt. Diese Nut ist beispielhaft in ein Führungsrohr oder in einen Stellkolben eingebracht, vorzugsweise vollständig umlaufend. Die Hülse wird mit deren Anschlag auf das jeweilige Bauteil aufgeschoben, bis es in die Sicherungsform, in diesem Fall also die Nut, einschnappt. Dadurch ist eine verliersichere Befestigung des Abschirmelements gewährleistet. Es kann beispielsweise auch ein Endabschnitt eines Rollbalgs oder eines Faltenbalgs an oder innerhalb einer solchen Sicherungsform angeordnet sein, beispielsweise ebenfalls einer umlaufenden Nut.

Günstiger Weise ist an einem Bauteil ein Stützelement angeordnet, an dem das Abschirmelement verliersicher angeordnet ist.

Ein Bauteil kann jedes Bauteil der Betätigungseinrichtung sein, vorzugsweise ein Teilkolben, das Gehäuse oder auch ein Bauteil der Klemmeinrichtung. Das Stützelement stellt dementsprechend eine mittelbare Anordnung des Abschirmelements an dem Bauteil bereit. Hierdurch kann zumeist eine einfachere Geometrie oder Ausführungsvariante des Abschirmelements gewählt werden und dennoch eine sichere Befestigung an dem gewünschten Bauteil erreicht werden. Das Stützelement kann zur Befestigung an dem jeweiligen Bauteil beispielsweise in eine Sicherungsform eingreifen, die in den vorherigen Abschnitten ausführlich erläutert wurde. Vorzugsweise ist das Stützelement an einer umlaufenden Nut des Bauteils befestigt.

In einer anderen Ausgestaltungsvariante ist das Abschirmelement über ein Sicherungselement verliersicher an dem jeweiligen Bauteil befestigt.

Durch das Sicherungselement ist eine dauerhafte Schmutzabschirmung gewährleistet. Ein solches Sicherungselement kann beispielsweise als Spannring ausgebildet sein, der an einem Balg zur Anlage kommt und diesen gegenüber dem Bauteil festdrückt. Alternativ kann das Sicherungselement auch durch einen Sicherungsring bereitgestellt sein, der in eine umlaufende Nut eingreift und dadurch eine axiale Bewegung des Abschirmelements über den Sicherungsring hinaus verhindert.

In einer besonders vorteilhaften Ausführungsvariante ist die Teleskophülse durch mehrere Kunststoffhülsen ausgebildet.

Die Kunststoffhülsen sind diese günstig herzustellen und weisen eine ausreichende Formstabilität und sind zudem Schmutzundurchlässig.

Die Betätigungseinrichtung mit Schmutzabschirmung wird im Weiteren beispielhaft und ausführlich anhand mehrerer Figuren erläutert.

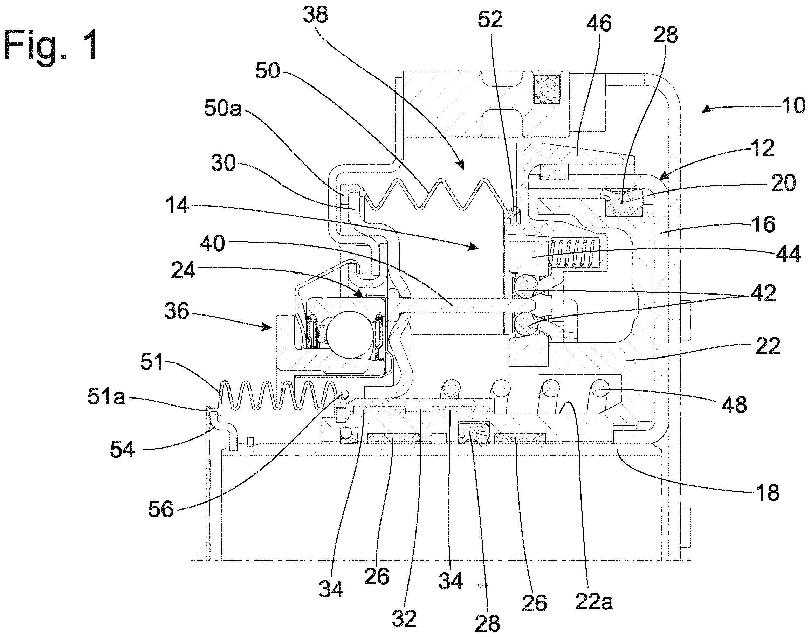

Die Figuren 1 bis 7 zeigen mehrere pneumatische Betätigungseinrichtungen mit verschiedenen Varianten von Abschirmelementen.

In der Figur 1 ist eine pneumatische Betätigungseinrichtung 10 dargestellt. Die pneumatische Betätigungseinrichtung 10 ist im Wesentlichen rotationssymmetrisch ausgebildet, so wie auch ein Großteil der an der Betätigungseinrichtung 10 ausgebildeten Bauteile.

Die pneumatische Betätigungseinrichtung 10 weist ein Gehäuse 12 sowie einen Arbeitskolben 14 auf. Auch das Gehäuse 12 ist mehrteilig ausgebildet und umfasst einen Arbeitszylinder 16 sowie ein fest mit dem Arbeitszylinder 16 verbundenes Führungsrohr 18. Das Führungsrohr 18 ist auf den Arbeitszylinder 16 aufgepresst und luftdicht mit diesen verschweißt.

Der Arbeitskolben 14 ist axial beweglich gegenüber dem Gehäuse 12 ausgeführt, wobei der Arbeitskolben 14 und das Gehäuse 12 einen Druckraum 20 umschließen. Der Druckraum 20 kann mit einem pneumatischen Druckmedium gefüllt werden, sodass sich der Arbeitskolben 14 axial gegenüber dem Gehäuse 12 bewegt und eine nicht dargestellte Reibungskupplung betätigt.

Zudem ist der Arbeitskolben 14 ist mehrteilig ausgeführt. Dieser umfasst einen Hauptkolben 22 sowie einen Stellkolben 24, die beide auch als Teilkolben bezeichnet werden. Der Hauptkolben 22 ist einteilig ausgeführt und ist gegenüber dem Stellkolben 24 geführt und kann sich gegenüber diesem abstützen. Außerdem stellt der Hauptkolben 22 eine Führung in Form einer Führungsfläche 22a für den Stellkolben 24 bereit, gegenüber der sich der Stellkolben 24 auch abstützen kann. An dem Hauptkolben 22 sind innerhalb von umlaufenden Nuten Gleitelement 26 angeordnet, die eine reibungsarme axiale Beweglichkeit gegenüber dem Führungsrohr 18 ermöglichen.

Zur Abdichtung des Druckraums 20 sind an dem Hauptkolben 22 Dichtelemente 28 ausgebildet. Die Dichtelement 28 sind in kreisförmig umlaufenden Nuten des Hauptkolbens 22 angeordnet. Eines der Dichtelemente ist radial außen an dem Hauptkolben 22 angeordnet und steht mit dem Arbeitszylinder 16 des Gehäuses 12 in Anlagekontakt, wobei das andere Dichtelement 28 radial innen angeordnet ist und mit dem Führungsrohr 18 des Gehäuses in Verbindung steht.

Der Stellkolben 24 ist mehrteilig ausgeführt und weist unter anderem einen sich in radialer Richtung erstreckenden Flansch 30 sowie ein rohrförmig ausgebildetes Führungselement 32 auf. Das Führungselement 32 und der Flansch sind fest miteinander verbunden, insbesondere durch eine Pressverbindung, die zusätzlich luftdicht verschweißt ist.

Der Stellkolben 24 wird durch das Führungselement 32 geführt, welches läuft auf einer Führungsfläche 22a des Hauptkolbens entlangleiten kann. Hierfür sind an dem Führungselement 32 Gleitelemente 34 innerhalb von kreisförmig umlaufenden Nuten angeordnet. Der Stellkolben 24 kann sich axial frei gegenüber dem Hauptkolben in axialer Richtung bewegen.

Zudem ist an dem Stellkolben 24 ein Ausrücklager 36 ausgebildet, welches mit einer nicht dargestellten Membranfeder der Reibungskupplung zusammenwirkt. Zudem ist an der pneumatischen Betätigungseinrichtung 10 beispielhaft eine Positionssensorik zur Erfassung der Axialposition des Arbeitskolbens angeordnet. Diese Positionssensorik ist hinreichend bekannt. In der Fig. 1 ist lediglich ein Positionsgeber dargestellt, dessen Position durch eine nicht dargestellte Sensorelektronik ermittelt werden kann

An dem Arbeitskolben 14, insbesondere zwischen dem Hauptkolben 22 und dem Stellkolben 24, ist eine Klemmeinrichtung 38 ausgebildet. Diese Klemmeinrichtung 38 sorgt während eines Betätigungsvorgangs der Betätigungseinrichtung für eine Fixierung zwischen Hauptkolben 22 und Stellkolben 24. Dadurch ist der Arbeitskolben während des Betätigungsvorgangs in seiner Wirklänge festgelegt. Mit Abschluss des Betätigungsvorgangs wird die Fixierung zwischen Hauptkolben 22 und Stellkolben 24 durch die Klemmeinrichtung wieder aufgehoben, so dass sich die Teilkolben wieder frei gegeneinander bewegen können. Der Arbeitskolben 14 passt dadurch seine Wirklänge dem ansteigendem Verschleiß der Reibungskupplung an.

Die Klemmeinrichtung 38 umfasst unter anderem ein Stellelement 40, mehrere zweireihig in Umfangsrichtung angeordnete Klemmkörper 42, ein Klemmelement 44 sowie ein Käfigelement 46.

Das Stellelement 40 ist fest mit dem Stellkolben 24 verbunden und greift in ein Klemmelement 44 ein oder gegebenenfalls durch dieses hindurch. Das Klemmelement ist fest mit dem Hauptkolben 22 verbunden. Zwischen dem Stellelement 40 und dem Klemmelement sind die Klemmkörper 42, beispielsweise in Form von Kugeln, Zylinderrollen oder Tonnen, in zwei Reihen angeordnet und gleichmäßig am Umfang entlang verteilt. Die Klemmeinrichtung 38 kann auch mit einer einzigen Reihe von Klemmkörpern ausgeführt sein. ist auch eine einreihige Ausführungsvariante möglich. Das Käfigelement 46 sorgt dafür, dass die Klemmkörper 42 in derer freien Beweglichkeit auf einen Raum zwischen dem Stellelement 40 und dem Klemmelement 44 begrenzt sind.

Bei einer axialen Bewegung zwischen Hauptkolben 22 und Stellkolben 24 führen das Stellelement 40 und das Klemmelement 44 ebenfalls eine Relativbewegung aus. Dadurch wird ein konische Klemmfläche des Klemmelements auf den Klemmkörper hinzubewegt, wobei der Klemmkörper 42 aufgrund eines axialen Anschlags festgehalten wird, sodass der Klemmkörper 42 zwischen Stellelement 40 und Klemmelement 44 eingeklemmt wird und dadurch die freie axiale Beweglichkeit zwischen den Teilkolben 22, 24 fixiert wird.

Mit Abschluss des Betätigungsvorgangs stellt das Käfigelement 46 einen Anlagekontakt mit dem Gehäuse 12 her und gibt diesen Anschlag an den Klemmkörper 42 weiter, sodass dieser aus er Klemmung gelöst wird und die freie Beweglichkeit zwischen den Teilkolben 22, 24 wieder hergestellt ist.

Die pneumatischen Betätigungseinrichtung 10 weist zudem ein Federelement 48 auf, welches das Stellelement 24 gegenüber der Reibungskupplung, insbesondere der Membranfeder, vorspannt und dadurch für die korrekte Wirklänge des Arbeitskolbens 14 sorgt.

Des Weiteren sind an der pneumatischen Betätigungseinrichtung 10 mehrere Abschirmelemente 50, 51 ausgebildet. Die Abschirmelemente 50, 51 sind jeweils an zwei Bauteilen der pneumatischen Betätigungseinrichtung 10 festgelegt.

Das radial äußere Abschirmelement 50 ist einerseits an der Klemmeinrichtung 38, insbesondere an dem Käfigelement 46, und andererseits an dem Flansch 30 des Stellkolbens 24 festgelegt. Das als Faltenbalg ausgebildete Abschirmelement 50 umgreift den Flansch 38 radial außen und ist durch einen radial nach innen weisenden und in Umfangsrichtung umlaufenden Abschnitt 50a an dem Flansch 30 befestigt. Klemmelementseitig ist das radial außen liegende Abschirmelement 50 durch einen als Spannring 52 ausgebildetes Sicherungselement an der Klemmeinrichtung 38 gesichert.

Das in einem radial inneren Bereich der pneumatischen Betätigungseinrichtung liegende Abschirmelement 51 ist einerseits mittelbar über ein Stützelement 54 an dem Führungsrohr 18 des Gehäuses 12 und andererseits über einen Spannring 56 an dem Führungselement 32 des Stellkolbens 24 festgelegt.

Das Stützelement 54 greift in eine radial außen an dem Führungsrohr 18 ausgeführte kreisförmig umlaufende Nut ein. Dadurch ist das Stützelement 54 verliersicher an dem Gehäuse 12 befestigt. Zur leichteren Montage ist an dem Führungsrohr 18 eine sich zur Nut hin radial aufweitende Rampe ausgebildet. Das Stützelement 54 wird einfach auf das Führungsrohr aufgeschoben. Optional kann das Stützelement 54 dafür geschlitzt ausgebildet sein.

Das Abschirmelement 50 weist eine u-förmige Aufnahme 51a auf, die das Stützelement 54 über den gesamten Umfang umgreift und dadurch verliersicher an diesem befestigt ist.

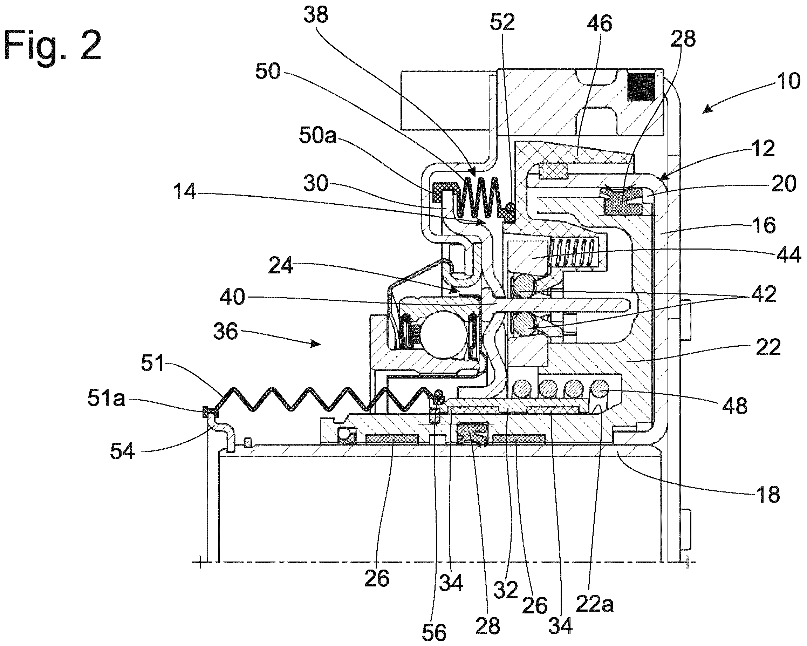

Die Faltenbalge 50 und 51 sind elastisch und können durch Verformung eine axiale Bewegung der Bauteile zueinander ausgleichen. Gezeigt ist dies in Figur 2, die die pneumatische Betätigungseinrichtung 10 aus Figur 1 darstellt, jedoch bei verschlissener Reibungskupplung. Die Faltenbalge können zudem auch eine Relativbewegung während eines Betätigungsvorgangs ausgleichen, um eine dauerhafte Schmutzabschirmung bereitzustellen.

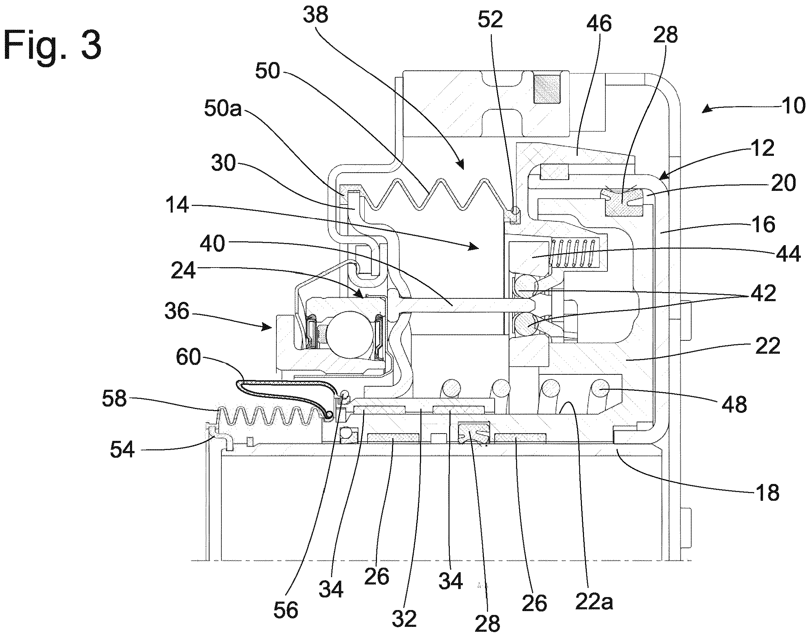

In der Figur 3 ist im Wesentlichen dieselbe pneumatische Betätigungseinrichtung 10 wie in Figur 1 und 2 dargestellt. Diese unterscheidet sich lediglich bezüglich der Abschirmelemente 50. Bezugszeichen für identische Bauteile wurden dementsprechend aus den vorigen Figuren übernommen.

Das Abschirmelement 51 ist durch zwei Abschirmelemente 58 und 60 ersetzt. Das Abschirmelement 58 ist einerseits mittelbar an dem Führungsrohr 18 angeordnet und andererseits direkt mit dem Hauptkolben 22 verbunden. Die Ausführung der Befestigung ist identisch zu dem des Abschirmelements 51. Allerdings ist das Abschirmelement 58 nun an dem Hauptkolben 22 und nicht an dem Stellkolben 24 befestigt. Das Abschirmelement 58 ist wie auch das Abschirmelement 51 als Faltenbalg ausgebildet.

Das weitere Abschirmelement 60 ist einerseits an dem Hauptkolben 22 und andererseits an dem Führungselement 32 des Stellkolbens 24 angeordnet. Dieses Abschirmelement 60 ist hierbei als Rollbalg ausgeführt, der sich entsprechend in axialer Richtung ab- oder aufrollen kann, um eine Schmutzabschirmung bei einer axialen Relativbewegung zwischen dem Teilkolben 22, 24 dauerhaft bereitzustellen.

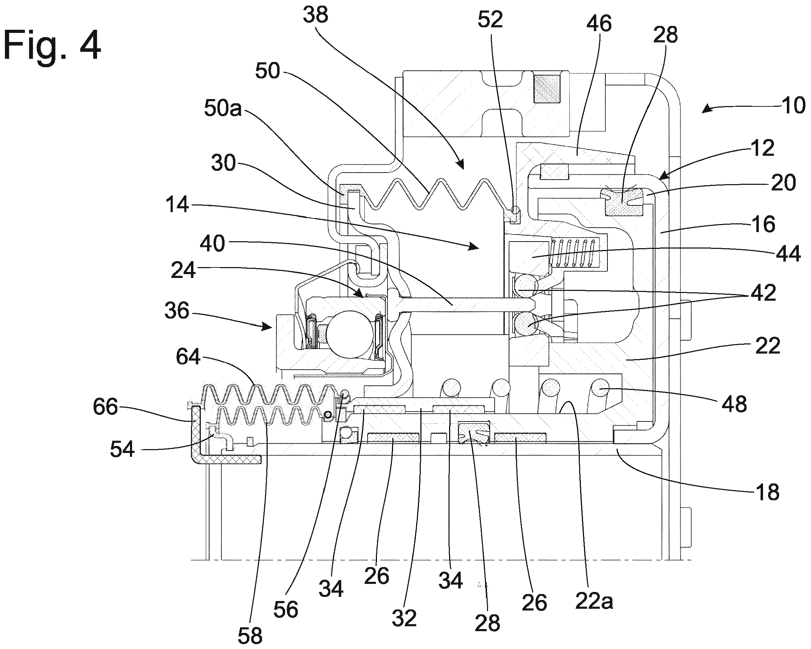

Die Figur 4 zeigt eine weitere Abwandlung der pneumatischen Betätigungseinrichtung 10 ausgehend von Figur 3. Hierbei ist das Abschirmelement 60 durch das Abschirmelement 64 ersetzt. Dieses Abschirmelement 64 ist durch einen Faltenbalg ausgebildet. Einerseits ist das Abschirmelement 64 an dem Stellkolben 22, insbesondere an dem Führungselement 32 über einen Spannring angeordnet. Andererseits ist das Abschirmelement 64 mittelbar an dem Gehäuse 12, insbesondere an einem weiteren Stützelement 66, welches fest mit dem Führungsrohr 18 verbunden ist. Hierdurch wird eine mehrstufige Abschirmung bereitgestellt, die ein Eindringen von Schmutz, insbesondere in den Raum zwischen Führungsrohr und Hauptkolben nochmals wesentlich erschwert.

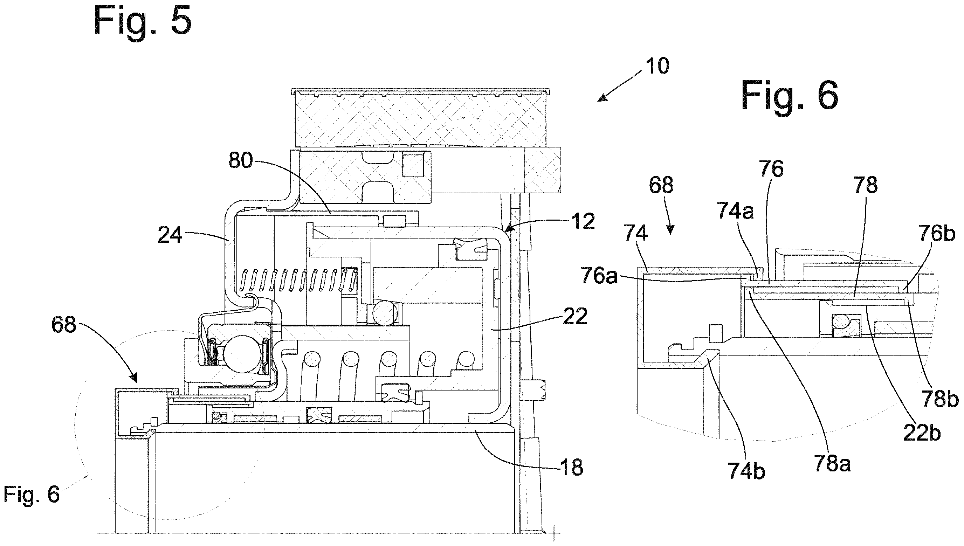

Eine weitere Ausführungsvariante ist in der Figur 5 und in einer dazugehörigen vergrößerten Darstellung nach Figur 6 gezeigt. Das radial innere Abschirmelement 68 ist durch eine Teleskophülse 68 ausgebildet. Die Teleskophülse ist aus drei Kunststoffhülsen 74, 76 und 78 ausgebildet, die sich in axialer Richtung gegeneinander verschieben können. An den Kunststoffhülsen sind Anschläge 74a, 76a und 76b sowie 78a ausgebildet, die in Umfangsrichtung umlaufen, einander hinterschneiden und dadurch eine verliersichere Befestigung aneinander ermöglichen. Zudem ist an der Kunststoffhülse 74 ein Anschlag 74b ausgebildet, der an dem Gehäuse 12, insbesondere dem Führungsrohr 18, in eine umlaufende Nut eingreift. Die erste Kunststoffhülse 74 ist dadurch fest mit dem Gehäuse 12 verbunden. Die Kunststoffhülse 78 weist einen hauptkolbenseitigen Abschnitt 78b auf, der ebenfalls in eine umlaufende Nut des Hauptkolbens 22 eingreift. Hierdurch ist die Kunststoffhülse 78 verliersicher befestigt und kann trotzdem noch eine Teleskopbewegung gegenüber dem Hauptkolben 22 ausführen. Die Nut 22b ist in axialer Richtung entsprechend länger ausgeführt als eine Breite des Abschnitts.

Das radial äußere Abschirmelement 80 ist durch eine Kuststoffhülse ausgebildet, die über eine Schnappverbindung an einer Nut des Stellkolbens 24 befestigt ist. Dieses Abschirmelement 80 muss zur Befestigung lediglich aufgeschoben werden. Gehäuseseitig ist ein Filz ausgebildet, der an dem Gehäuse 12 schmutzabweisend entlangläuft.

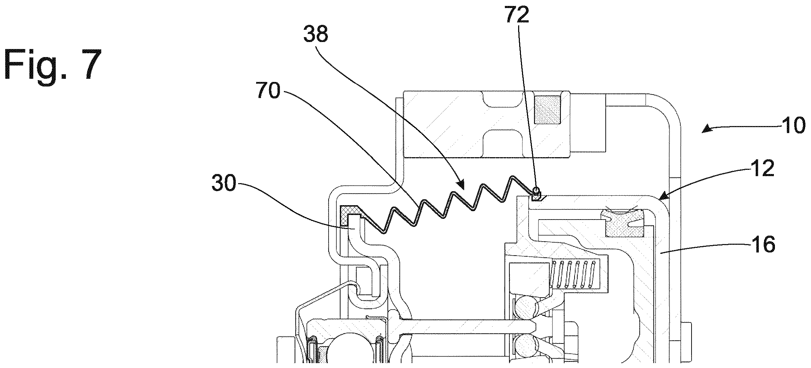

Die Figur 7 zeigt einen Ausschnitt eine pneumatische Betätigungseinrichtung 10 und zwar das radial äußere Abschirmelement 70. Der restliche Aufbau gleich dem aus Figur 1. Das Abschirmelement 70 ist in Form eines Faltenbalgs ausgebildet, der einerseits an dem Flansch 30 und andererseits an dem Arbeitszylinder 16 des Gehäuses 12 festgelegt ist. Das Abschirmelement 70 ist gehäuseseitig über einen Spannring 72 festgelegt. Durch einen derartigen Aufbau wird einerseits der Raum der Klemmeinrichtung 38 sowie auch die Schmutzabschirmung für den Druckraum durch ein einziges Abschirmelement 70 übernommen.

### Bezugszeichen

- 10: pneumatische Betätigungseinrichtung
- 12: Gehäuse
- 14: Arbeitskolben
- 16: Arbeitszylinder
- 18: Führungsrohr
- 20: Druckraum
- 22: Hauptkolben
- 22a: Führungsfläche
- 22b: Nut
- 24: Stellkolben
- 26: Gleitelement
- 28: Dichtelement
- 30: Flansch
- 32: Führungselement
- 34: Gleitelement
- 36: Ausrücklager
- 38: Klemmeinrichtung
- 40: Stellelement
- 42: Klemmkörper
- 44: Klemmelement
- 46: Käfigelement
- 48: Federelement
- 50: Abschirmelement
- 50a: Abschnitt
- 51: Abschirmelement
- 51a: u-förmige Aufnahme
- 52: Spannring
- 54: Stützelement
- 56: Spannring
- 58: Abschirmelement
- 60: Abschirmelement
- 64: Abschirmelement
- 66: Stützelement
- 68: Teleskophülse
- 70: Abschirmelement
- 72: Spannring
- 74: Kunststoffhülse
- 74a: Anschlag
- 74b: Anschlag
- 76: Kunststoffhülse
- 76a: Anschlag
- 76b: Anschlag
- 78: Kunststoffhülse
- 78a: Anschlag
- 78b: Anschlag
- 80: Abschirmelement

## Patentansprüche

1. Betätigungseinrichtung (10) für ein Kraftfahrzeug, wobei die Betätigungseinrichtung als pneumatische Betätigungseinrichtung ausgebildet ist, umfassend
- ein Gehäuse (12) und
- einen gegenüber dem Gehäuse (12) beweglichen mehrteiligen Arbeitskolben (14), wobei
- das Gehäuse (12) und der Arbeitskolben (14) einen Druckraum (20) umschließen, der mit einem Druckmedium (20) gefüllt werden kann, um ein axiales Ausrücken des Arbeitskolbens (14) gegenüber dem Gehäuse (12) zur Betätigung einer Kupplung bereitzustellen, wobei
- der mehrteilige Arbeitskolben (14) einen Hauptkolben (22) und einen Stellkolben (24) aufweist, die für einen Verschleißausgleich axial beweglich zueinander ausgebildet sind,
- wobei eine Klemmeinrichtung (38) den Hauptkolben (22) und den Stellkolben (24) zur Fixierung einer Wirklänge des Arbeitskolbens (14) gegeneinander verklemmen kann, wobei
- an dem Stellkolben (24) ein Ausrücklager (36) ausgebildet ist, wobei
- Hauptkolben (22) und Stellkolben (24) als Teilkolben (22, 24) des Arbeitskolbens (14) bezeichnet werden,
- wobei ein Abschirmelement (50, 51,58, 60, 64 70, 80) zum Schutz der Betätigungseinrichtung (10) vor Schmutz
• an dem Gehäuse (12) und an einem Teilkolben (22, 24) oder
• an einem ersten Teilkolben (22, 24) und einem zweiten Teilkolben (22, 24) oder
• an dem Stellkolben (22, 24) und an der Klemmeinrichtung (38) angeordnet ist.

2. Betätigungseinrichtung (10) nach Anspruch 1, **dadurch gekennzeichnet, dass** das Abschirmelement als Faltenbalg, als Rollbalg oder als Teleskophülse ausgebildet ist.

3. Betätigungseinrichtung (10) nach Anspruch 1 oder 2, **dadurch gekennzeichnet, dass** das Abschirmelement an dem jeweiligen Bauteil in eine Sicherungsform eingreift.

4. Betätigungseinrichtung (10) nach einem der Ansprüche 1 bis 3, **dadurch gekennzeichnet, dass** an einem Bauteil ein Stützelement angeordnet ist, an dem das Abschirmelement verliersicher angeordnet ist.

5. Betätigungseinrichtung (10) nach einem der Ansprüche 1 bis 4, **dadurch gekennzeichnet, dass** das Abschirmelement über ein Sicherungselement verliersicher an dem jeweiligen Bauteil befestigt ist.

6. Betätigungseinrichtung (10) nach einem der Ansprüche 2 bis 5, **dadurch gekennzeichnet, dass** die Teleskophülse durch mehrere Kunststoffhülsen ausgebildet ist.

## Claims

1. Actuating device (10) for a motor vehicle, wherein the actuating device is designed as a pneumatic actuating device, comprising
- a housing (12) and
- a multipart working piston (14) which is movable in relation to the housing (12), wherein
- the housing (12) and the working piston (14) enclose a pressure chamber (20) which can be filled with a pressure medium (20) in order to axially disengage the working piston (14) with respect to the housing (12) for actuation of a clutch, wherein
- the multipart working piston (14) has a main piston (22) and an actuating piston (24) which are designed to be axially movable with respect to one another for wear compensation,
- wherein a clamping device (38) can clamp the main piston (22) and the actuating piston (24) against one another to fix an operative length of the working piston (14), wherein
- a release bearing (36) is formed on the actuating piston (24), wherein
- the main piston (22) and actuating piston (24) are designated as partial pistons (22, 24) of the working piston (14),
- wherein a shielding element (50, 51, 58, 60, 64, 70, 80) for protecting the actuating device (10) from dirt
• is arranged on the housing (12) and on a partial piston (22, 24) or
• on a first partial piston (22, 24) and a second partial piston (22, 24) or
• on the actuating piston (22, 24) and on the clamping device (38).

2. Actuating device (10) according to Claim 1, **characterized in that** the shielding element is designed as a corrugated bellows, as a rolling bellows or as a telescopic sleeve.

3. Actuating device (10) according to Claim 1 or 2, **characterized in that** the shielding element engages in a securing formation on the respective component.

4. Actuating device (10) according to one of Claims 1 to 3, **characterized in that** a component has arranged thereon a supporting element on which the shielding element is captively arranged.

5. Actuating device (10) according to one of Claims 1 to 4, **characterized in that** the shielding element is captively fastened to the respective component via a securing element.

6. Actuating device (10) according to one of Claims 2 to 5, **characterized in that** the telescopic sleeve is formed by a plurality of plastic sleeves.

## Revendications

1. Dispositif d'actionnement (10) pour un véhicule automobile, le dispositif d'actionnement étant réalisé sous forme de dispositif d'actionnement pneumatique, comprenant :
- un carter (12) et
- un piston de travail (14) en plusieurs parties, mobile par rapport au carter (12),
- le carter (12) et le piston de travail (14) entourant une chambre de pression (20), qui peut être remplie d'un fluide sous pression (20) pour fournir une sortie axiale du piston de travail (14) par rapport au carter (12) pour actionner un embrayage,
- le piston de travail en plusieurs parties (14) présentant un piston principal (22) et un piston de réglage (24), qui sont réalisés sous forme mobile axialement l'un par rapport à l'autre pour une égalisation de l'usure,
- un dispositif de serrage (38) pouvant serrer l'un contre l'autre le piston principal (22) et le piston de réglage (24) pour fixer une longueur active du piston de travail (14),
- un palier de sortie (36) étant réalisé sur le piston de réglage (24),
- le piston principal (22) et le piston de réglage (24) étant désignés comme des pistons partiels (22, 24) du piston de travail (14),
- un élément de blindage (50, 51, 58, 60, 64, 70, 80) pour protéger le dispositif d'actionnement (10) de la saleté étant agencé
• sur le carter (12) et sur un piston partiel (22, 24) ou
• sur un premier piston partiel (22, 24) et un deuxième piston partiel (22, 24) ou
• sur le piston de réglage (22, 24) et sur le dispositif de serrage (38).

2. Dispositif d'actionnement (10) selon la revendication 1, **caractérisé en ce que** l'élément de blindage est réalisé sous forme de soufflet plissé, de soufflet roulant ou de gaine télescopique.

3. Dispositif d'actionnement (10) selon la revendication 1 ou 2, **caractérisé en ce que** l'élément de blindage s'engage dans une forme de sécurité sur le composant respectif.

4. Dispositif d'actionnement (10) selon l'une quelconque des revendications 1 à 3, **caractérisé en ce qu'**un élément de support est agencé sur un composant, sur lequel l'élément de blindage est agencé de manière imperdable.

5. Dispositif d'actionnement (10) selon l'une quelconque des revendications 1 à 4, **caractérisé en ce que** l'élément de blindage est fixé de manière imperdable sur le composant respectif par l'intermédiaire d'un élément de sécurité.

6. Dispositif d'actionnement (10) selon l'une quelconque des revendications 2 à 5, **caractérisé en ce que** la gaine télescopique est réalisée par plusieurs gaines en matière plastique.
